# EUROPÄISCHE PATENTANMELDUNG

(11) **EP 3 072 764 A1**
(43) Veröffentlichungstag der Anmeldung: **28.09.2016**
(21) Anmeldenummer: 16000226.7
(22) Anmeldetag: 29.01.2016
(51) Int. Cl.: B60W 10/06, B60W 10/08, B60K 6/48, B60K 6/485, B60W 20/00

(54) **BETRIEBSVERFAHREN FÜR EINEN SEGELBETRIEB BEI EINEM HYBRIDFAHRZEUG**

(30) Priorität: 26.03.2015 DE 102015003899
(71) Anmelder: MAN Truck & Bus AG, 80995 München (DE)
(72) Erfinder: Kirchensteiner, Elmar, 85256 Vierkirchen (DE); Bruno, Francesco, 85664 Hohenlinden (DE); Hierlmeier, Matthias, 80997 München (DE); Kerschl, Stefan, 85402 Kranzberg (DE)
(74) Vertreter: v. Bezold & Partner Patentanwälte - PartG mbB

(57) **Zusammenfassung**

Die Erfindung betrifft ein Verfahren für einen sogenannten Segelbetrieb bei einem Kraftfahrzeug mit hybridisierten Antriebsstrang (6), bei dem die kinetische Energie des Kraftfahrzeugs genutzt wird, um möglichst weit zu rollen, ohne dass der Verbrennungsmotor (1) im Segelbetrieb von der kinetischen Energie des Fahrzeugs geschleppt wird. Gemäß allgemeinen Gesichtspunkten der Erfindung wird im Segelbetrieb die Kraftstoffeinspritzung an der Brennkraftmaschine (1) deaktiviert (S2) und die Brennkraftmaschine mittels der elektrischen Maschine (2) auf einer Segeldrehzahl gehalten, die kleiner gleich einer Leerlaufdrehzahl der Brennkraftmaschine ist (S3).

## Beschreibung

Die Erfindung betrifft ein Verfahren für einen sogenannten Segelbetrieb bei einem Kraftfahrzeug mit hybridisiertem Antriebsstrang, bei dem die kinetische Energie des Kraftfahrzeugs genutzt wird, um möglichst weit zu rollen, ohne dass der Verbrennungsmotor im Segelbetrieb von der kinetischen Energie des Fahrzeugs geschleppt wird.

Zur Kraftstoffeinsparung und Reduzierung der Schadstoffemissionen werden Kraftfahrzeuge zunehmend mit hybridisierten Antriebssträngen ausgestattet.

Ferner ist es aus dem Stand der Technik bekannt, Kraftfahrzeuge bei geeigneten Strecken, insbesondere Gefällen, in einem sogenannten Roll- oder Segelmodus zu betreiben.

Der dem Fachmann bekannte Segelmodus eines Kraftfahrzeugs oder Hybridfahrzeugs besteht darin, dass die kinetische Energie des Kraftfahrzeugs in Rollphasen genutzt wird, um eine möglichst hohe Rollgeschwindigkeit aufrechtzuerhalten und somit eine möglichst hohe Rolldistanz zu erreichen. Dabei wird beispielsweise gemäß der Schrift DE 10 2008 029 453 A1 der Verbrennungsmotor des Fahrzeugs vom restlichen Antriebsstrang entkoppelt, was durch Öffnen der Kupplung oder durch eine Neutralschaltung im Getriebe passiert, um die bremsende Wirkung des Schleppmoments des Motors zu reduzieren. Im Gegensatz zu einem herkömmlichen Rollbetrieb, bei dem der Antriebsstrang geschlossen ist, d. h., der in dem Fahrgetriebe eingelegte Gang bleibt eingelegt bzw. die eingestellte Übersetzung bleibt eingestellt und die Trennkupplung bleibt eingerückt, ist der Antriebsmotor im Segelbetrieb somit vom restlichen Antriebsstrang entkoppelt. Aufgrund des in diesem Fall nicht wirksamen Schleppmomentes des Antriebsmotors ist eine längere antriebslose Rollphase möglich, da eine an eine Rollphase anschließende Zugphase infolge der erhaltenen Rollgeschwindigkeit bzw. erzielten Rolldistanz zu einem späteren Zeitpunkt einsetzen und/oder mit geringerer Motorleistung erfolgen kann. Daraus erwächst ein Potential zur Einsparung von Kraftstoff.

Bei dem Segelbetrieb gemäß der DE 10 2008 029 453 wird der Antriebsmotor im Leerlauf betrieben. Nachteilig an dieser Betriebsweise ist, dass der Leerlaufbetrieb des Verbrennungsmotors das Kraftstoffverbrauchsreduzierungspotential verringert. Ein Weiterlaufen des Verbrennungsmotors im Leerlaufbetrieb bietet jedoch den Vorzug, dass die vom Verbrennungsmotor angetriebenen Nebenaggregate im Segelbetrieb weiter genutzt werden können und eine Elektrifizierung dieser Aggregate nicht erforderlich ist.

Eine komplette Abschaltung des Verbrennungsmotors im Rollbetrieb wäre für den Kraftstoffverbrauch die ideale Lösung. Im Stand der Technik ist es daher ferner bekannt, den Kraftstoffverbrauch während des Segelns zusätzlich zu reduzieren, indem der Motor nicht nur - anstatt bei hoher Drehzahl geschleppt zu werden - vom Antriebsstrang entkoppelt und befeuert im Motorleerlauf betrieben wird, sondern auch vollständig abgestellt wird und bei einer sich anschließenden Zugphase wieder zugestartet wird.

In diesem Fall werden die über den Motor angetriebenen Nebenverbraucher wie etwa die Lenkhilfeunterstützung einer Servolenkung, ein Klimakompressor oder ein Druckluftpresser jedoch nicht mehr gespeist. In der praktischen Umsetzung ist diese Variante daher mit Nachteilen verbunden, insbesondere, da für den Fahrzeugbetrieb von Nutzfahrzeugen wichtige Nebenaggregate auch im Rollbetrieb weiterhin zuverlässig angetrieben werden müssen. Eine Möglichkeit wäre die Elektrifizierung dieser Nebenaggregate, was jedoch mit zusätzlichen Kosten verbunden ist.

Es ist somit eine Aufgabe der Erfindung, ein verbessertes Segelbetriebsverfahren bereitzustellen, mit dem Nachteile herkömmlicher Techniken vermieden werden können. Die Aufgabe der Erfindung ist es insbesondere, ein Segelbetriebsverfahren mit hoher Kraftstoffeffizienz bereitzustellen, das gleichzeitig einen sicheren Betrieb der Nebenaggregate ermöglicht.

Diese Aufgaben werden durch ein Betriebsverfahren mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Betriebsverfahren für einen sogenannten Segelbetrieb bei einem Hybridfahrzeug bereitgestellt, bei dem die kinetische Energie des Kraftfahrzeugs genutzt wird, um möglichst weit zu rollen, ohne dass die Brennkraftmaschine im Segelbetrieb von der kinetischen Energie des Fahrzeugs geschleppt wird. Die Unterbrechung des Kraftflusses zum Verbrennungsmotor kann durch Ausrücken der Trennkupplung und/oder durch das Einlegen einer Neutralstellung im Fahrgetriebe erfolgen. Der Antriebsstrang des Hybridfahrzeugs umfasst in an sich bekannter Weise eine Brennkraftmaschine und zumindest eine drehmomentmäßig mit der Brennkraftmaschine koppelbare elektrische Maschine. Die Brennkraftmaschine wird nachfolgend auch als Verbrennungsmotor bezeichnet.

Gemäß allgemeinen Gesichtspunkten der Erfindung ist im Segelbetrieb die Kraftstoffeinspritzung am Verbrennungsmotor deaktiviert bzw. unterbrochen (nicht-befeuerter Betrieb des Verbrennungsmotors), wobei der Verbrennungsmotor jedoch mittels der elektrischen Maschine auf einer vorbestimmten Drehzahl, nachfolgend als Segeldrehzahl bezeichnet, gehalten wird. Die Segeldrehzahl ist hierbei kleiner gleich einer Leerlaufdrehzahl des Verbrennungsmotors. Es wird betont, dass der Antriebsstrang auch mehr als eine elektrische Antriebsmaschine enthalten kann. Im Segelbetrieb ist zumindest eine elektrische Maschine des Antriebsstrangs drehmomentmäßig mit der Brennkraftmaschine gekoppelt, so dass die Brennkraftmaschine durch Ansteuerung der mindestens einen elektrischen Maschine von der elektrischen Maschine geschleppt und auf der Segeldrehzahl gehalten wird.

Der erfindungsgemäße Segelbetrieb ermöglicht somit eine Weiterversorgung der vom Verbrennungsmotor angetriebenen Nebenaggregate, ohne dass diese elektrifiziert werden müssten. Im Vergleich zu einem herkömmlichen Segelbetrieb, bei dem der Verbrennungsmotor im befeuerten Betrieb auf Leerlaufdrehzahl gehalten werden kann, kann mit dem erfindungsgemäßen Segelbetrieb eine Kraftstoffeinsparung erzielt werden, da die elektrische Maschine des Hybridantriebs im Segelbetrieb auch unter Einsatz von elektrischer Energie, die durch Bremsrekuperation und/oder Lastpunktanhebung gewonnen wurde, betrieben werden kann. Die benötigte elektrische Leistung zur Kompensation der Verbrennungsmotorschleppverluste liegt typischerweise in einem Bereich, bei dem sowohl die elektrische Maschine als auch der zugeordnete elektrische Energiespeicher einen sehr hohen Wirkungsgrad aufweisen.

Gemäß einer besonders bevorzugten Ausgestaltungsform ist die Segeldrehzahl kleiner als die Leerlaufdrehzahl, so dass der Verbrennungsmotor im Segelbetrieb auf einer Drehzahl größer null, aber kleiner der Leerlaufdrehzahl gehalten wird.

Im Vergleich zu einem Segelbetrieb bei Leerlaufdrehzahl des Verbrennungsmotors ermöglicht das Absenken der Segeldrehzahl unter die Leerlaufdrehzahl eine Reduzierung der Geräuschemissionen des Verbrennungsmotors sowie ein Kraftstoffeinsparpotential aufgrund des dadurch reduzierten Schleppmoments des Verbrennungsmotors. Ferner können durch die abgesenkte Segeldrehzahl die Luftmassenströme durch die Zylinder der Brennkraftmaschine und den Abgastrakt verringert und dadurch die Auskühlung des Abgassystems verringert werden.

Eine elektrische Maschine weist auch bei deutlich niedrigeren Drehzahlen als die typische Leerlaufdrehzahl von Verbrennungsmotoren eine hohe Laufruhe auf, so dass die Drehzahl des Verbrennungsmotors im Segelbetrieb mittels der elektrischen Maschine auf einen beliebigen Wert abgesenkt werden kann. Da die Drehzahl des Verbrennungsmotors nicht vollständig abfällt, können die Nebenaggregate in der Regel durchgehend weiter betrieben werden.

Ein weiterer Vorteil ist das rasche Ansprechverhalten des Verbrennungsmotors auf einen Momentenwunsch nach einer Segelphase. Anders als bei einem Segelbetrieb, bei dem der Verbrennungsmotor nicht auf einer Mindestdrehzahl gehalten wird, muss die Drehzahl nicht von null weg, sondern nur von der abgesenkten Segeldrehzahl auf die Leerlaufdrehzahl angehoben werden, bevor eine Momentenabgabe erfolgen kann. Ein weiterer Vorteil ist die Aufrechterhaltung eines Schmierfilms im Verbrennungsmotor.

Gemäß einer weiteren Ausführungsform der Erfindung ist die Ventilsteuerung der Brennkraftmaschine so ausgeführt, dass die Einlassventile und Auslassventile der Brennkraftmaschine während des Segelbetriebs in einem geschlossenen Zustand bleiben.

Dies bietet den Vorzug, dass dadurch im Segelbetrieb ein Auskühlen der Brennkraftmaschine und der Abgasanlage verhindert oder zumindest reduziert werden kann und dadurch die Schadstoffemissionsgrenzwerte zuverlässiger eingehalten werden können. Dies beruht auf der Feststellung, dass im Segelbetrieb bei deaktivierter Kraftstoffeinspritzung kein Wärmeeintrag mehr in die von der elektrischen Maschine geschleppte Brennkraftmaschine und in den Abgastrakt erfolgt. Durch das Schließen der Einlass- und Auslassventile kann somit vermieden werden, dass durch den geschleppten Betrieb erzeugte Luftströme das Abkühlen der Brennkraftmaschine und des Abgastrakt beschleunigen. Der benötige Energieaufwand zur Komprimierung der Luft in einem Zylinder wird durch die Entspannung der komprimierten Luft in einem anderen Zylinder aufgebracht, so dass kein zusätzlicher Energieaufwand hierfür von der elektrischen Maschine bereitgestellt werden muss.

Das Auskühlen der Brennkraftmaschine und der Abgasanlage kann gemäß einer weiteren Ausführungsform auch dadurch verhindert oder zumindest reduziert werden, dass während des Segelbetriebs ein Bypass bzw. eine Bypass-Leitung, mittels dessen bzw. der aus der Brennkraftmaschine austretendes Abgas vor Erreichen einer Abgasnachbehandlungseinrichtung zu den Einlassventilen der Brennkraftmaschine rückführbar ist oder an einer Abgasnachbehandlungseinrichtung vorbeiführbar ist, geöffnet ist. Eine weitere Lösung hierfür ist ein Bypass, der eine Zirkulation der Luft zwischen den Zylindern ermöglicht. Als Bypass kann vorliegend direkt das Abgasrückführungssystem verwendet werden. Gemäß einer weiteren Variante kann somit während des Segelbetriebs ein Abgasrückführungssystem aktiviert werden, um die Abgasrückführungsrate zu erhöhen.

Ferner kann die Segeldrehzahl vorteilhafterweise so festgelegt sein, dass die auf der Segeldrehzahl gehaltene Brennkraftmaschine keine Eigenresonanzen im Fahrzeug anregt. Beispielsweise werden gemäß dieser Variante mittels Versuchen im Rahmen der Fahrzeugentwicklung aus den möglichen Segeldrehzahlen diejenigen herausgefiltert, die Eigenresonanzen anregen.

Eine weitere Möglichkeit der erfindungsgemäßen Realisierung sieht vor, dass eine Höhe der Segeldrehzahl in Abhängigkeit von einer vorliegenden Momentenanforderung der von der Brennkraftmaschine angetriebenen Nebenaggregate festgelegt wird, insbesondere in Abhängigkeit von einer erforderlichen Lenkhilfeunterstützung einer Servolenkung. In Abhängigkeit von den Momentenanforderungen kann eine Mindestdrehzahl für den Segelbetrieb ermittelt werden, die noch eine ausreichende Versorgung der Nebenaggregate ermöglicht. Ein weiterer Faktor bei der Festlegung der Höhe der Segeldrehzahl kann die benötigte bzw. gewünschte Zeit sein, um die Brennkraftmaschine nach Beendigung des Segelbetriebs mittels der elektrischen Maschine und/oder Einspritzung des Verbrennungsmotors wieder auf seine Leerlaufdrehzahl anzuheben.

Gemäß einem weiteren Gesichtspunkt der Erfindung wird ein Steuergerät zur Steuerung eines sogenannten Segelbetriebs bei einem Hybridfahrzeug wie vorstehend bereitgestellt. Hierbei ist das Steuergerät eingerichtet, das Betriebsverfahren für den Segelbetrieb wie hierin offenbart unter Ansteuerung der entsprechenden Antriebsstrangkomponenten auszuführen.

Die Erfindung betrifft ferner ein Hybridfahrzeug, das ein derartiges Steuergerät aufweist. Das Hybridfahrzeug ist insbesondere ein Nutzfahrzeug. Bei Nutzfahrzeugen können aufgrund ihres in der Regel hohen Gewichts besonders lange Segelphasen realisiert werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild eines Antriebsstrangs eines Parallel-Hybrid-Fahrzeugs;
- Figur 2: ein Ablaufdiagramm zur Illustration eines Betriebsverfahrens für einen Segelbetrieb gemäß einer Ausführungsform der Erfindung;
- Figur 3: einen Drehzahlverlauf eines Verbrennungsmotors bei einem Segelbetrieb gemäß einer Ausführungsform der Erfindung; und
- Figur 4: eine Gegenüberstellung eines erfindungsgemäßen Drehzahlverlaufs mit aus dem Stand der Technik bekannten Drehzahlverläufen.

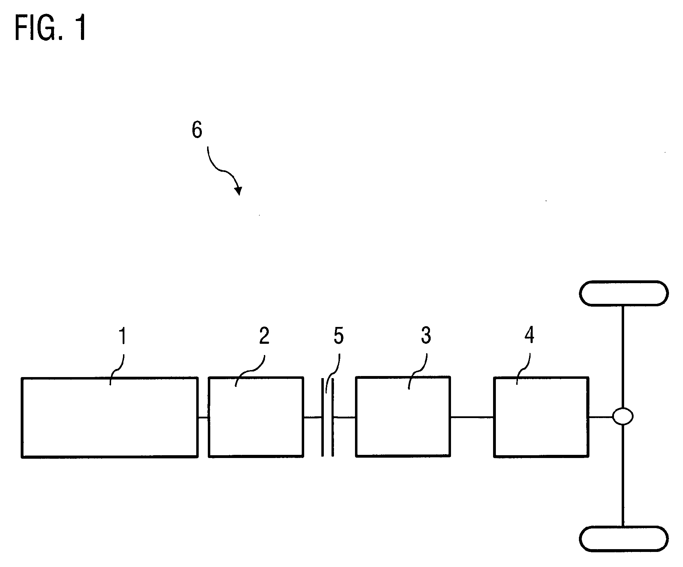

Figur 1 zeigt ein schematisches Blockschaltbild eines Antriebsstrangs 6 eines Parallel-Hybrid-Fahrzeugs. Der Antriebsstrang 6 umfasst in an sich bekannter Weise einen Verbrennungsmotor 1 und zumindest eine elektrische Maschine (Elektromotor) 2, die drehmomentmäßig mit dem Verbrennungsmotor 1 koppelbar ist. Vorliegend ist in Kraftflussrichtung nach der ersten elektrischen Maschine 2 eine zweite elektrische Maschine 3 vor dem Getriebe 4 angeordnet. Der Verbrennungsmotor 1 und die elektrische Maschine 2 können durch Öffnen einer Kupplung 5 von der elektrischen Maschine 3 und dem Getriebe 4 abgekoppelt werden. Die elektrischen Maschinen 2, 3 sind ferner mit mindestens einem Traktionsenergiespeicher für elektrische Energie verbunden (nicht dargestellt).

Es wird betont, dass die Erfindung auch mit anderen hybridisierten Antriebsstrangkonfigurationen realisiert werden kann, solange die elektrische Maschine so betrieben werden kann, dass sie drehmomentmäßig mit dem Verbrennungsmotor 1 koppelbar ist, um diesen im Segelbetrieb zu schleppen, wobei die elektrische Maschine und der Verbrennungsmotor im Segelbetrieb vom restlichen Antriebsstrang entkoppelt sind.

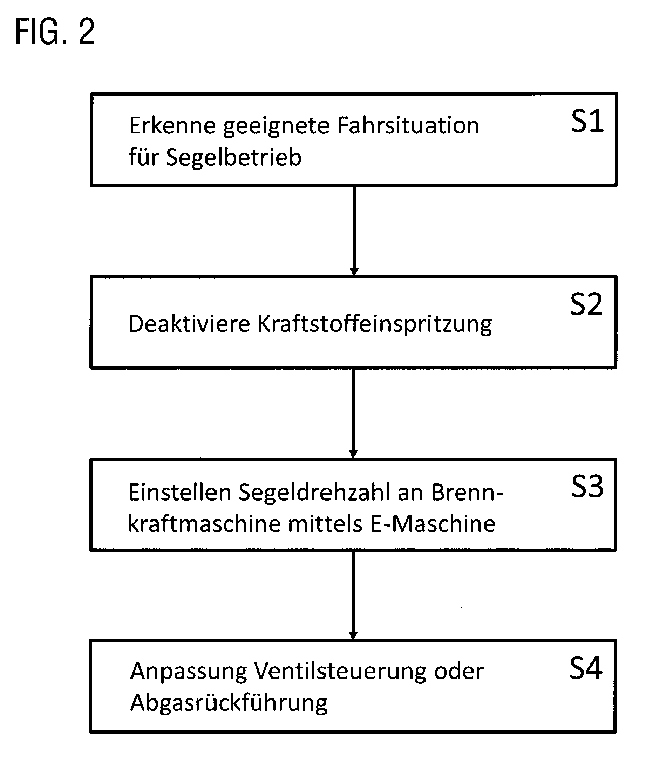

Figur 2 zeigt ein Ablaufdiagramm zur Illustration eines Betriebsverfahrens für einen Segelbetrieb gemäß einer Ausführungsform der Erfindung.

Das Verfahren beginnt in herkömmlicher Weise in Schritt S1 mit der Erkennung einer geeigneten Fahrsituation für den Segelbetrieb. Nach welchen Regeln (d. h. in Abhängigkeit von welchen Fahrzeugbetriebsbedingungen und/oder Fahrzeugumgebungsbedingungen) das Fahrzeug während eines Fahrbetriebs sinnvollerweise vorübergehend in den Segelbetrieb wechselt, ist bereits vielfach bekannt und nicht Gegenstand dieser Erfindung. Für das erfindungsgemäße Verfahren können beispielsweise Bedingungen ausgewählt und ausgewertet werden, aufgrund deren Vorliegen auf einen Zustand geschlossen werden kann, in dem ein aktiver Betrieb der Brennkraftmaschine zur Überwindung des Fahrwiderstands nicht erforderlich ist. Ein Beispiel ist das Erkennen einer vorausliegenden längeren Gefällestrecke, die anhand von topographischen Streckeninformationen erkannt wird. Für die Realisierung des erfindungsgemäßen Verfahrens wird bevorzugt auf herkömmliche Auswerteverfahren, wie sie bei bekannten Fahrzeugen, die automatisiert in einen Segelbetriebsmodus gehen können, zurückgegriffen. Alternativ kann der Segelbetrieb durch Vorgabe eines Segelbetriebsstartsignals des Fahrers erkannt werden, der über eine entsprechende Eingabevorrichtung anzeigt, dass er in einen Segelbetrieb wechseln möchte.

Wurde somit in Schritt S1 erkannt, dass ein Segelbetrieb erfolgen soll, wird in Schritt S2 zunächst die Kraftstoffeinspritzung des Verbrennungsmotors 1 eingestellt. Ferner wird die Trennkopplung 5 geöffnet, um die elektrische Maschine 2 und den Verbrennungsmotor 1 vom restlichen Antriebsstrang 6 abzutrennen.

Anschließend wird in Schritt S3 durch Ansteuerung der elektrischen Maschine 2 der Verbrennungsmotor 1 mittels der elektrischen Maschine 2 auf einer Segeldrehzahl d1 gehalten, die unterhalb einer Leerlaufdrehzahl d0 des Verbrennungsmotors 1 liegt.

In Schritt S4 können ferner über ein Schließen der Einlass- und Auslassventile des Verbrennungsmotors 1 und/oder durch Erhöhung des Anteils an rückgeführtem Abgas die Auskühlung des Abgastrakts, insbesondere der Abgasnachbehandlungseinrichtung, verlangsamt werden, wie vorstehend beschrieben.

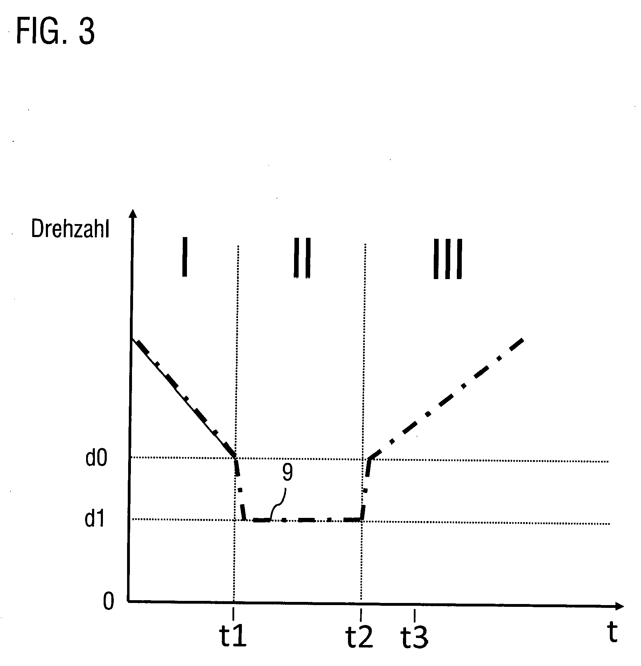

Das Einregeln des Verbrennungsmotors auf die Segeldrehzahl ist im Diagramm der Figur 3 illustriert. Figur 3 zeigt den zeitlichen Verlauf 9 der Drehzahl des Verbrennungsmotors 1. Hierbei entspricht der mit "II" bezeichnete Zeitabschnitt zwischen t1 und t2 der Segelphase, in der die Segeldrehzahl auf den vorbestimmten Sollwert eingeregelt wird. Die mit "I" bzw. "III" bezeichneten Abschnitte zeigen den Drehzahlverlauf unmittelbar davor und danach an.

Nach der Deaktivierung der Kraftstoffeinspritzung in Schritt S2 sinkt die Motordrehzahl im Abschnitt I ab. Gemäß Schritt S3 wird die elektrische Maschine 2 im Segelbetrieb so angesteuert, dass sie ein Drehmoment auf den Verbrennungsmotor 1 ausübt und diesen auf der Segeldrehzahl d1 hält, die unterhalb der Leerlaufdrehzahl d0 des Verbrennungsmotors 1 liegt.

Nach Beendigung des Segelbetriebs zum Zeitpunkt t2 beschleunigt die elektrische Maschine 2 den Verbrennungsmotor 1 zunächst auf dessen Leerlaufdrehzahl d0. Anschließend wird die Kraftstoffeinspritzung wieder aktiviert, wodurch die Drehzahl im befeuerten Betrieb des Verbrennungsmotors 1 weiter ansteigt.

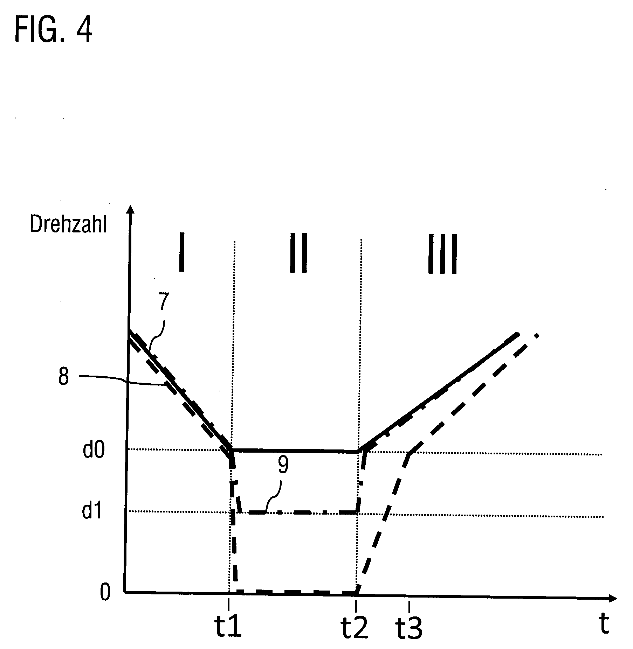

Zur Illustration der Unterschiede der Erfindung sind in Figur 4 zum Vergleich zwei aus dem Stand der Technik bekannte Drehzahlverläufe für einen Segelbetrieb dargestellt, wie sie eingangs erwähnt wurden. Hierbei gibt die gestrichelte Kurve 8 einen Segelbetrieb an, bei dem die Einspritzung des Verbrennungsmotors aktiviert wird und dann zum Stillstand kommt. Die Motordrehzahl fällt somit im Bereich zwischen t1 und t2 auf null ab. Die durchgezogene Linie 7 illustriert dagegen einen herkömmlichen Segelbetrieb, bei dem die Einspritzung des Verbrennungsmotors 1 im Segelbetrieb nicht eingestellt wird, sondern dieser weiter so befeuert wird, dass er während der Segelphase t1 und t2 bei Leerlaufdrehzahl d0 betrieben wird. Der Verlauf der Segeldrehzahl gemäß dem vorliegenden Ausführungsbeispiel ist in Figur 4 wiederum durch die gestrichpunktete Kurve 9 dargestellt.

Es ist erkennbar, dass der erfindungsgemäße Segelbetrieb 9 gegenüber dem bekannten Segelbetrieb 8 den Vorteil hat, dass ein schnellerer Momentaufbau nach Ende der Segelphase zum Zeitpunkt t2 möglich ist. Gemäß dem erfindungsgemäßen Segelbetrieb muss der Verbrennungsmotor nur von d1 auf d0 beschleunigt werden, während gemäß dem Verlauf 8 der Verbrennungsmotor erst von null auf die Leerlaufdrehzahl d0 beschleunigt werden muss, was wesentlich länger dauert, so dass ein nachfolgender Momentenabbau erst später erfolgen kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Verbrennungsmotor
- 2: Elektrische Maschine
- 3: Elektrische Maschine
- 4: Getriebe
- 5: Trennkupplung
- 6: Antriebsstrang
- 7,8: Herkömmlicher Drehzahlverlauf
- 9: Drehzahlverlauf gemäß Ausführungsbeispiel
- d0: Leerlaufdrehzahl
- d1: Segeldrehzahl

## Patentansprüche

1. Betriebsverfahren für einen sogenannten Segelbetrieb bei einem Hybridfahrzeug, bei dem die kinetische Energie des Kraftfahrzeugs genutzt wird, um möglichst weit zu rollen, ohne dass die Brennkraftmaschine im Segelbetrieb von der kinetischen Energie des Fahrzeugs geschleppt wird, wobei ein Antriebsstrang (6) des Hybridfahrzeugs eine Brennkraftmaschine (1) und eine drehmomentmäßig mit der Brennkraftmaschine (1) koppelbare elektrische Maschine (2) umfasst, **dadurch gekennzeichnet,**
**dass** im Segelbetrieb die Kraftstoffeinspritzung an der Brennkraftmaschine (1) deaktiviert ist (S2) und die Brennkraftmaschine mittels der elektrischen Maschine auf einer Segeldrehzahl (d1) gehalten wird, die kleiner gleich einer Leerlaufdrehzahl (d0) der Brennkraftmaschine ist (S3).

2. Betriebsverfahren nach Anspruch 1, **dadurch gekennzeichnet, dass** die Segeldrehzahl (d1) kleiner als die Leerlaufdrehzahl (d0) ist.

3. Betriebsverfahren nach Anspruch 1 oder 2, **dadurch gekennzeichnet, dass** die Ventilsteuerung der Brennkraftmaschine (1) so ausgeführt ist, dass die Einlassventile und Auslassventile der Brennkraftmaschine während des Segelbetriebs in einem geschlossenen Zustand bleiben.

4. Betriebsverfahren nach Anspruch 1 oder 2, **dadurch gekennzeichnet,**
(a) **dass** während des Segelbetriebs ein Bypass, mittels dessen aus der Brennkraftmaschine (1) austretendes Abgas vor Erreichen einer Abgasnachbehandlungseinrichtung zu den Einlassventilen der Brennkraftmaschine (1) rückführbar ist oder an einer Abgasnachbehandlungseinrichtung vorbeiführbar ist, geöffnet ist; und/oder
(b) **dass** während des Segelbetriebs ein Abgasrückführungssystem aktiviert wird, um die Abgasrückführungsrate zu erhöhen.

5. Betriebsverfahren nach einem der vorhergehenden Ansprüche, **dadurch gekennzeichnet, dass** die Segeldrehzahl (d1) so festgelegt ist, dass die auf der Segeldrehzahl gehaltene Brennkraftmaschine keine Eigenresonanzen im Fahrzeug anregt.

6. Betriebsverfahren nach einem der vorhergehenden Ansprüche, **dadurch gekennzeichnet, dass** eine Höhe der Segeldrehzahl (d1) in Abhängigkeit von einer vorliegenden Momentenanforderung der von der Brennkraftmaschine (1) angetriebenen Nebenaggregate festgelegt wird, insbesondere in Abhängigkeit von einer erforderlichen Lenkhilfeunterstützung einer Servolenkung.

7. Steuergerät zur Steuerung eines sogenannten Segelbetriebs bei einem Hybridfahrzeug, bei dem die kinetische Energie des Kraftfahrzeugs genutzt wird, um möglichst weit zu rollen, ohne dass die Brennkraftmaschine im Segelbetrieb von der kinetischen Energie des Fahrzeugs geschleppt wird, wobei ein Antriebsstrang des Hybridfahrzeugs eine Brennkraftmaschine (2) und eine drehmomentmäßig mit der Brennkraftmaschine (1) koppelbare elektrische Maschine (2) zur Erzeugung eines Antriebsmoments an einer Antriebswelle umfasst, **dadurch gekennzeichnet,**
**dass** das Steuergerät eingerichtet ist, das Verfahren gemäß einem der Ansprüche 1 bis 6 durchzuführen.

8. Hybridfahrzeug, insbesondere Nutzfahrzeug, aufweisend ein Steuergerät nach Anspruch 7.
